# EUROPÄISCHE PATENTSCHRIFT

(11) **EP 3 782 932 B1**
(45) Veröffentlichungstag und Bekanntmachung des Hinweises auf die Patenterteilung: **06.10.2021**
(21) Anmeldenummer: 19193381.1
(22) Anmeldetag: 23.08.2019
(51) Int. Cl.: B65G 1/04, B65G 1/137, B65G 65/00

(54) **STAPELLAGERANORDNUNG**
STACK STORAGE ASSEMBLY
DISPOSITIF DE STOCKAGE PAR EMPILEMENT

(43) Veröffentlichungstag der Anmeldung: 24.02.2021
(73) Patentinhaber: Jungheinrich Aktiengesellschaft, 22047 Hamburg (DE)
(72) Erfinder: Rollwa, Volker, 66953 Pirmasens (DE); Cavelius, Jörg, 61118 Bad Vilbel (DE); Becker, Michael, 63512 Hainburg (DE); Liebhaber, Markus, 61440 Oberursel (DE)
(74) Vertreter: Keil & Schaafhausen Patentanwälte PartGmbB

(56) Entgegenhaltungen:
- EP-A1- 3 341 308
- WO-A1-2018/233886
- DE-A1-102008 039 764
- DE-A1-102013 009 340
- US-A1- 2018 265 291
- US-A1- 2019 129 371

## Beschreibung

Die vorliegende Erfindung betrifft eine Stapellageranordnung nach dem Oberbegriff des Anspruchs 1.

Eine derartige Stapellageranordnung ist beispielsweise aus EP 0 012 733 B1 und DE102013009340 A1 bekannt.

In einer Stapellageranordnung können Behälter in aufeinandergestapelter Form gelagert werden. Für jeden dieser Behälterstapel ist ein Behälteraufnahmeraum vorgesehen. Die Behälteraufnahmeräume können relativ dicht benachbart angeordnet werden, so dass man einen zur Verfügung stehenden Lagerraum sehr gut ausnutzen kann.

Wenn ein Behälter von unten in einen Stapel eingebracht wird oder von unten aus dem Stapel entnommen wird, dann wird ein Beschickungsfahrzeug durch den Beschickungsraum gefahren, bis es unterhalb des entsprechenden Behälteraufnahmeraums positioniert werden kann. Beim Einlagern eines Behälters wird der Behälter solange angehoben, bis er mit dem untersten Behälter des bereits vorhandenen Stapels in Kontakt kommt. Danach wird der einzulagernde Behälter weiter angehoben und hebt dadurch den gesamten Stapel mit an. Das Anheben erfolgt solange, bis der neu einzulagernde Behälter von einer Halteeinrichtung gehalten werden kann, die üblicherweise am Behälter einrastet. Die Halteeinrichtungen aller Behälteraufnahmeräume bilden eine Halteanordnung.

Beim Entnehmen des untersten Behälters aus dem Behälteraufnahmeraum wird wiederum das Beschickungsfahrzeug verwendet, das den gesamten Stapel anhebt, bis der zu entnehmende Behälter von der Halteeinrichtung freikommt. Die Halteeinrichtung wird dann geöffnet und offengehalten, bis der zu entnehmende Behälter an der Halteeinrichtung vorbei abgesenkt worden ist. Danach trifft die Halteeinrichtung wieder in Aktion und hält die verbleibenden Behälter des Stapels. Der zu entnehmende Behälter kann dann weiter abgesenkt und aus dem Beschickungsraum heraus in den Übergabebereich gefahren werden. Im Übergabebereich muss der Behälter dann vom Beschickungswagen entnommen werden oder der Beschickungswagen muss den Behälter an den Übergabebereich übergeben, bevor er weiterverwendet werden kann.

US 2018/0265291 A1 zeigt eine Lageranordnung, in der mehrere Behälter in Regalen gelagert werden können. Die Regale sind dabei so ausgebildet, dass sie den jeweiligen Behälter in einem gewissen Abstand über dem Boden halten. Ein Transportfahrzeug kann unter die Regale gefahren werden, um einen Behälter abzugeben oder einen Behälter aufzunehmen. Das Transportfahrzeug weist Aufstandsflächen auf, zwischen denen Ausnehmungen vorgesehen sind. In diese Ausnehmungen können Übergabefinger der Regale eintreten. Der Behälter wird beim Einfahren des Transportfahrzeugs in das Regal eine kleine Rampe hochgeschoben.

Der Erfindung liegt die Aufgabe zugrunde, eine Stapellageranordnung kostengünstig auszugestalten.

Diese Aufgabe wird bei einer Stapellageranordnung mit den Merkmalen des Anspruchs 1 gelöst.

Das Beschickungsfahrzeug kann dann gemäss Anspruch 1 in die Übergabeeinrichtung so eingefahren werden, dass die Übergabefinger in die Ausklinkungen eintreten. Die Übergabefinger befinden sich dann unmittelbar unter dem Behälter, der vom Beschickungsfahrzeug entfernt werden soll. Durch Absenken der Behälteraufnahme wird dann der Behälter auf einfache Weise an die Übergabefinger übergeben. Beim Beladen des Beschickungsfahrzeugs geht man auf gleiche Weise vor. Das Beschickungsfahrzeug wird unter die Übergabefinger gefahren. Die Behälteraufnahme wird angehoben, so dass die Übergabefinger in die Ausklinkungen eintreten können. Die Behälteraufnahme wird dann soweit angehoben, dass der Behälter von den Übergabefingern freikommen und das Beschickungsfahrzeug kann in Richtung der Längserstreckung der Übergabefinger von der Übergabeeinrichtung wegbewegt werden.

Vorzugsweise bilden die Übergabefinger eine Abstützfläche, die in der gleichen Höhe in eine Transporteinrichtung übergeht. Auch zwischen den Übergabefingern und der Transporteinrichtung ist also eine Hubbewegung des Behälters nicht erforderlich. Der Behälter kann einfach in einer Ebene von den Übergabefingern auf die Transporteinrichtung bewegt werden, ohne dass eine Höhendifferenz überwunden werden muss.

Vorzugsweise ist die Transporteinrichtung mit zwei Arten von Übergabeeinrichtungen verbunden, wobei eine erste Art von Übergabeeinrichtung zur Bereitstellung eines Behälters dient, der in einem Behälteraufnahmeraum einzulagern ist, und eine zweite Art von Übergabeeinrichtungen zur Aufnahme aus einem Behälteraufnahmeraum entnommenen Behälters dient. Damit kann man das Einlagern und das Auslagern von Behältern in bzw. aus dem Behälteraufnahmeraum voneinander entkoppeln.

Vorzugsweise bildet die Transporteinrichtung einen vorzugsweise geschlossenen Umlauf und eine Übergabeeinrichtung der ersten Art ist näher an den Behälteraufnahmeräumen angeordnet als eine Übergabeeinrichtung der zweiten Art. Die Transporteinrichtung kann beispielsweise in Form eines Ovals ausgebildet sein. Es ist aber auch möglich, sie nur U-förmig auszubilden, wenngleich ein geschlossener Umlauf vorteilhaft ist, weil hier Behälter sozusagen in einem Kreislauf geführt werden können. Wenn die Übergabeeinrichtung der ersten Art näher an den Behälteraufnahmeräumen angeordnet ist, dann kann man ein Beschickungsfahrzeug, das einen entnommenen Behälter an die Übergabeeinrichtung der zweiten Art übergeben hat, verwenden, um sozusagen auf der Rückfahrt einen einzulagernden Behälter in einen der Behälteraufnahmeräume zu transportieren.

Hierbei ist bevorzugt, dass die Übergabeeinrichtungen innerhalb des Umlaufs angeordnet sind. Damit wird eine platzsparende Bauweise realisiert.

Auch ist von Vorteil, dass eine Übergabeeinrichtung der ersten Art und eine Übergabeeinrichtung der zweiten Art in einer Fahrtrichtung des Beschickungsfahrzeugs hintereinander angeordnet sind. Das Fahrzeug kann dann mit einer linearen Bewegung von der Übergabeeinrichtung der zweiten Art zur Übergabeeinrichtung der ersten Art fahren und dort einen einzulagernden Behälter übernehmen.

Vorzugsweise sind insbesondere in der Übergabeeinrichtung der zweiten Art Übergabefinger vorgesehen, die Rollen aufweisen, die um Rollenachsen drehantreibbar sind und an deren Umfang Rollkörper angeordnet sind, die um Rollkörperachsen drehbar sind, wobei die Rollenachsen und die Rollkörperachsen windschief zueinander ausgerichtet sind und die Rollkörper der Rollen entgegengesetzte Richtungen aufweisen. Die Rollenachsen und die Rollkörperachse schneiden sich nicht. Die Rollkörper sind außen an den angetriebenen Rollen angeordnet. Dementsprechend wird ein Behälter auf den Rollkörpern abgesetzt. Die Rollkörper, auf denen der Behälter aufsteht, haben entgegengesetzt gerichtete Winkel, vorzugsweise entgegengesetzt gleich große Winkel. Wenn nun die angetriebenen Rollen gedreht werden, dann versetzen die Rollen mit ihren Umfangsflächen die Rollkörper ebenfalls in eine Drehbewegung. Diese Drehbewegung hat eine Komponente, die parallel zu den Rollenachsen gerichtet ist. Auf diese Weise ist es möglich, den Behälter parallel zur Rollenachse zu fördern, so dass der Behälter von der Übergabeeinrichtung auf die Transportrichtung gefördert werden kann.

Vorzugsweise sind insbesondere in der Übergabeeinrichtung der ersten Art Übergabefinger vorgesehen, die als vorzugsweise geneigte Röllchenleiste ausgebildet sind. Bei einer geneigten Röllchenleiste gibt es mehrere "Röllchen", also kleine Rollen, deren Rotationsachse senkrecht zu einer Bewegungsrichtung des Behälters gerichtet ist. Auf diesen Röllchen kann der Behälter dann rollen. Eine derartige Rollbewegung erfolgt automatisch, wenn die Röllchenleiste geneigt ist. Da die Übergabeeinrichtung der ersten Art dafür vorgesehen ist, einen Behälter bereitzuhalten, der in einen Behälteraufnahmeraum eingelagert werden soll, ist es lediglich erforderlich, den Behälter von der Transporteinrichtung auf die Röllchenleiste zu fördern. Sobald er mit seinem Schwerpunkt auf der Röllchenleiste angekommen ist, läuft er von selbst bis zum Ende der Röllchenleiste, wobei vorzugsweise ein Anschlag oder Ähnliches vorgesehen ist.

Bevorzugterweise weist die Transporteinrichtung im Bereich mindestens einer Übergabeeinrichtung paarweise angeordnete Rollen auf, die um Rollenachsen drehantreibbar sind und an deren Umfang Rollkörper angeordnet sind, die um Rollkörperachsen drehbar sind, wobei die Rollenachsen und die Rollkörperachsen windschief zueinander ausgerichtet sind und die Rollkörper der Rollen eines Paares entgegengesetzte Richtungen aufweisen, wobei jede angetriebene Rolle in zwei Rotationsrichtungen antreibbar ist. Hier kann man die gleiche Technik verwenden, die oben im Zusammenhang mit der Übergabeeinrichtung der zweiten Art beschrieben worden ist. Allerdings kann man in der Transporteinrichtung Bewegungen in zwei Richtungsachsen und in jeder Richtungsaccchse vorwärts und rückwärts, also insgesamt 4 Bewegungen (vorwärts, rückwärts, links, rechts), realisieren. Wenn die drehbaren Rollen in die gleiche Richtung angetrieben werden, dann erfolgt ein Transport eines Behälters senkrecht zu den Rollenachsen. Wenn hingegen die Rollen eines Paares gegensinnig angetrieben werden, dann erfolgt die Bewegung des Behälters parallel zu den Achsen. Dementsprechend ist es möglich, mit der Transporteinrichtung Behälter ein- und auszuschleusen, beispielsweise an den beiden Übergabeeinrichtungen. Die Bezeichnung "Paar" soll hier aussagen, dass es zwei Arten von Rollen gibt, die sich dadurch unterscheiden, dass ihre Rollkörper jedenfalls dort, wo ein Behälter aufsteht, entgegengesetzt gleich große Winkel einschließen. Dabei muss sichergestellt sein, dass ein Behälter immer auf zwei unterschiedlichen Rollen aufstehen, um die gewünschte Förderwirkung erzielen zu können. Die Rollen eines Paares müssen dabei nicht unbedingt nebeneinander angeordnet sein, sind es aber vorzugsweise.

Vorzugsweise ist auf der der Übergabeeinrichtung der zweiten Art gegenüberliegenden Seite der Transporteinrichtung eine Handhabungsstation angeordnet, in der eine Bedienungsperson Zugriff auf einen Behälter hat. Man entnimmt normalerweise einen Behälter aus einem Behälteraufnahmeraum, um eine darin gelagerte Ware zu entnehmen. Diese Entnahme kann vorzugsweise in der Handhabungsstation vorgenommen werden.

Bevorzugterweise ist im Übergangsbereich mindestens eine Übergabeeinrichtung angeordnet, die in einer zweiten Höhe angeordnet ist, die der ersten Höhe entspricht. Die erste Höhe und die zweite Höhe müssen dabei nicht unbedingt identisch im mathematischen Sinne sein. Die Übergabeeinrichtung ist aber etwa in der Höhe angeordnet, in der der untere Behälter eines Stapels in der Halteanordnung gehalten ist. Auf diese Weise lassen sich alle Hubbewegungen, die zum Einlagern und Auslagern des Behälters und zum Einbringen des Behälters in das Beschickungsfahrzeug und zum Entnehmen des Behälters von dem Beschickungsfahrzeug durch die Hubbewegung der Behälteraufnahme realisieren. Weitere Einrichtungen, die eine Hubbewegung durchführen könnten, um den Behälter anzuheben, sind nicht erforderlich. Wenn der Behälter aus dem Beschickungsraum herausgefahren worden ist, dann kann der Beschickungswagen den Behälter anheben, bis er die Höhe der Übergabeeinrichtung erreicht, den Behälter dann auf die Übergabeeinrichtung bewegen und die Behälteraufnahme absenken, so dass der Behälter dann auf der Übergabeeinrichtung zu liegen kommt. Bei dem umgekehrten Vorgang wird der Beschickungswagen unter die Übergabeeinrichtung verfahren, hebt dann die Behälteraufnahme an, um den Behälter von der Übergabeeinrichtung frei zu bekommen. Danach kann der Beschickungswagen von der Übergabeeinrichtung wegbewegt werden und die Behälteraufnahme wird abgesenkt, damit der Beschickungswagen in den Beschickungsraum gefahren werden kann.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Stapellageranordnung,
- Fig. 2: einen Beschickungswagen auf dem Weg in eine Übergabeeinrichtung,
- Fig. 3: den Beschickungswagen bei der Übergabe eines Behälters in die Übergabeeinrichtung,
- Fig. 4: eine Übergabeeinrichtung einer ersten Art und
- Fig. 5: eine Übergabeeinrichtung einer zweiten Art.

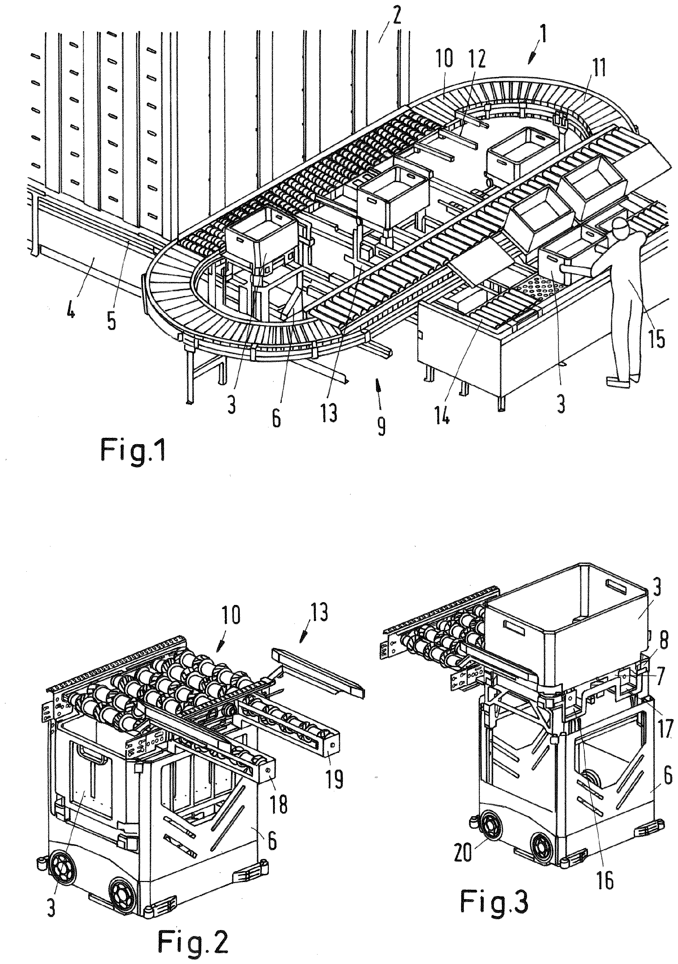

Fig. 1 zeigt in schematischer Form eine Stapellageranordnung 1 mit mehreren Behälteraufnahmeräumen 2, in denen Behälter 3 gestapelt gelagert werden können. Die Stapellageranordnung 1 weist mehrere derartige Behälteraufnahmeräume 2 auf, die in Form einer Matrix mit Reihen und Spalten angeordnet sein können. Beispielsweise kann man fünf Spalten und sechzehn Reihen vorsehen, so dass man insgesamt achtzig Stapel von Behältern 3 unterbringen kann.

Die Behälter 3 werden von unten in den jeweiligen Behälterraum 2 eingebracht und auch von unten aus dem jeweiligen Behälterraum 2 entnommen. Dementsprechend ist unterhalb der Behälteraufnahmeräume 2 ein Beschickungsraum 4 vorgesehen. Zwischen den Behälteraufnahmeräumen 2 und dem Beschickungsraum 4 ist eine Halteanordnung 5 vorgesehen, von der hier nur ein Rahmen dargestellt ist. Die Halteanordnung 5 weist für jeden Behälteraufnahmeraum 2 eine Halteeinrichtung auf, die beispielsweise mehrere Halteklinken aufweisen kann, die die untersten Behälter eines Stapels halten und eine Bewegung des untersten Behälters und damit eine Bewegung des Stapels in den Beschickungsraum 4 verhindern.

Wenn ein Behälter 3 in einen Behälteraufnahmeraum 2 eingelagert werden soll, wird dieser Behälter 3 mit einem Beschickungsfahrzeug 6 in den Beschickungsraum 4 hineingefahren. Wenn das Beschickungsfahrzeuge 6 eine Position unterhalb eines Behälterstapels erreicht hat, in der der einzulagernde Behälter 3 eingelagert werden soll, dann wird eine Behälteraufnahme 7 des Beschickungsfahrzeugs 6 in eine Hubrichtung angehoben und zwar solange, bis der einzulagernde Behälter 3 mit dem untersten Behälter eines Stapels in Kontakt kommt. Die Behälteraufnahme 7 wird weiter angehoben und hebt dann nicht nur den einzulagernden Behälter 3 an, sondern auch den Stapel der übrigen Behälter. Dieses Anheben erfolgt solange, bis der einzulagernde Behälter an der Halteeinrichtung vorbeibewegt worden ist. Danach wird der gesamte Stapel einschließlich dem einzulagernden Behälter abgesenkt, bis die Halteeinrichtung in Eingriff mit dem neu eingelagerten Behälter kommt und diesen festhält. Die Behälteraufnahme ist vorzugsweise über den gesamten Hubweg im Beschickungsfahrzeug 6 geführt, was einerseits eine hohe Stabilität beim Anheben bewirkt. Andererseits wird der Behälter 3 beim Verfahren des Beschickungsfahrzeugs 6 sicher auf der Behälteraufnahme 7 gehalten.

Beim Entnehmen eines Behälters 3 wird das Beschickungsfahrzeug 6 wieder in eine Position unterhalb des Behälterstapels verfahren. Die Behälteraufnahme 7 wird angehoben, bis sie in Kontakt mit dem zu entnehmenden Behälter kommt. Die Behälteraufnahme 7 wird weiter angehoben und hebt damit den gesamten Stapel an und zwar solange, bis der zu entnehmende Behälter von der Halteeinrichtung freikommt. Die Halteeinrichtung wird dann gelöst. Hierzu kann man beispielsweise am Beschickungswagen vorgesehene Entsperrelemente 8 verwenden, die die Halteeinrichtung entsperren, also in eine Freigabeposition bewegen, und die Halteeinrichtung solange offenhalten, bis durch Absenken der Behälteraufnahme 7 der zu entnehmende Behälter 3 in den Beschickungsraum 4 bewegt worden ist. Die Entsperrelemente 8 werden dann ebenfalls mit nach unten bewegt, so dass die Halteeinrichtung den unteren Behälter des verbleibenden Stapels wieder festhalten kann.

Das Beschickungsfahrzeug 6, von denen drei in Fig. 1 dargestellt sind, fördert dann den Behälter 3 in abgesenkter Position aus dem Beschickungsraum 4 in einen Übergabebereich 9, in dem mindestens eine Transporteinrichtung 10 angeordnet ist, die in einem Umlauf geführt ist und eine Vielzahl von angetriebenen Rollen 11 aufweist. Allerdings müssen nicht alle Rollen angetrieben sein, solange sichergestellt ist, dass der Behälter 3 auf der Transporteinrichtung 10 über den gesamten Umlauf bewegt werden kann. Die Transporteinrichtung 10 muss nicht unbedingt geschlossen sein, wie dargestellt, sondern sie kann beispielsweise auch U-förmig oder auf andere Weise ausgebildet sein. Ein geschlossener Umlauf ist jedoch von Vorteil.

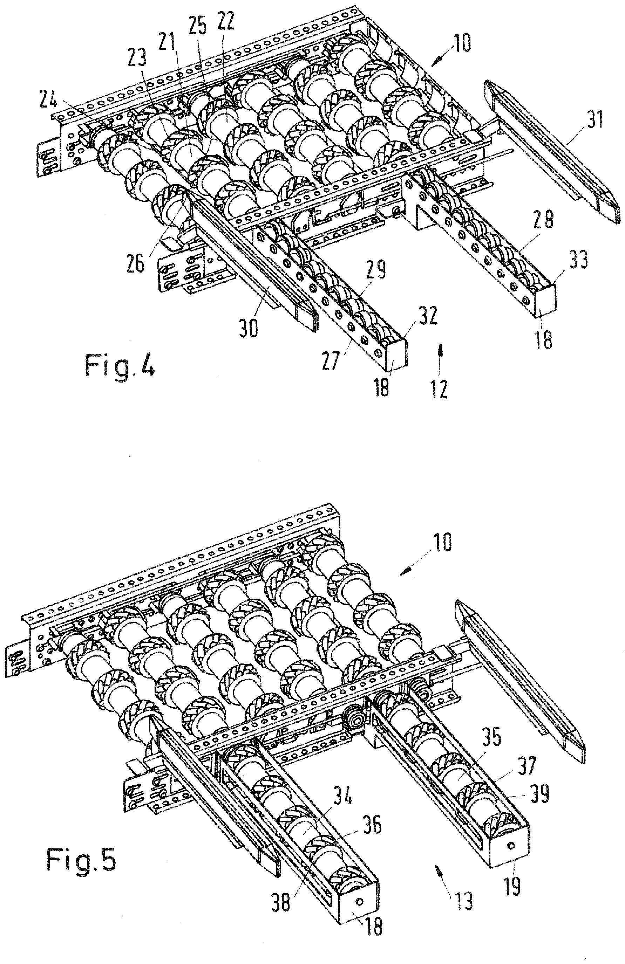

Der Übergabebereich 9 weist mehrere Übergabeeinrichtungen auf. Eine erste Art 12 von Übergabeeinrichtungen ist vorgesehen, um einen Behälter 3 bereitzustellen, der in einen Behälteraufnahmeraum 2 eingelagert werden soll. Diese erste Art der Übergabeeinrichtung 12 wird im Zusammenhang mit Fig. 4 näher erläutert. Weiterhin ist eine zweite Art 13 von Übergabeeinrichtungen vorgesehen. Die zweite Art 13 von Übergabeeinrichtungen dient zur Aufnahme eines Behälters 3, der aus einem Behälteraufnahmeraum 2 entnommen worden ist. Auf der der zweiten Art 13 von Übergabeeinrichtungen abgewandten Seite der Transporteinrichtung 10 ist eine Handhabungsstation 14 angeordnet, in der eine Bedienungsperson 15 Zugriff auf den Behälter 3 hat, beispielsweise um dort Waren oder Gegenstände zu entnehmen oder derartige Waren oder Gegenstände in den Behälter 3 einzubringen.

Die Fig. 2 und 3 zeigen eine Übergabeeinrichtung der zweiten Art.

Wie man in Fig. 3 erkennen kann, weist der Beschickungswagen 6 in der Behälteraufnahme 7 zwei Ausklinkungen 16, 17 auf. Die Übergabeeinrichtung 13 der zweiten Art weist zwei Übergabefinger 18, 19 auf. Die Übergabefinger 18, 19 passen in die Ausklinkungen 16, 17. Das Beschickungsfahrzeug 6 weist Räder 20 auf, mit denen es in eine Fahrtrichtung bewegt werden kann. Die Übergabefinger 18, 19 und auch die Ausklinkungen 16, 17 erstrecken sich vorzugsweise parallel zu der Fahrrichtung.

Die Transporteinrichtung 10 weist geradlinige Abschnitte mit mehreren parallel zueinander angeordneten Rollen 21, 22 auf. Alle Rollen 21, 22 sind um parallel verlaufende Rollenachsen drehbar und zumindest ein Großteil der Rollen 21, 22 ist durch entsprechende Antriebe auch drehantreibbar. Die Antriebe sind so ausgebildet, dass jede der angetriebenen Rollen 21, 22 in beide Rotationsrichtungen gedreht werden kann. Die Transporteinrichtung 10 weist auch Kurvenabschnitte mit Rollen auf, deren Achsen nicht parallel zueinander ausgerichtet sind.

Am Umfang der Rolle 21 sind Rollkörper 23 drehbar gelagert. Die Rollkörper 23 sind in einem Rollkörperkäfig 24 drehbar angeordnet, der auf den Umfang der Rolle 21 aufgepasst ist oder auf andere Weise fest mit der Rolle 21 verbunden istuU. Die Rollkörper 23 sind um Rollkörperachsen verdrehbar, die windschief zu der Rollenachse der Rolle 21 angeordnet sind.

In entsprechender Weise weist die Rolle 22 Rollkörper 25 auf, die in einem Rollkörperkäfig 26 drehbar gelagert. Ein Behälter 3 steht dann auf den Rollkörpern 23, 25 auf. Dabei schließen die Rollkörperachsen der Rollkörper 23, 25 mit einer Projektion der Rollenachsen auf den Boden des Behälters 3 jeweils entgegengesetzte gleich große Winkel ein.

Wenn eine Rolle 21, 22 gedreht wird, dann werden die Rollkörper 23, 25 ebenfalls gedreht und erzeugen eine Antriebskraft auf einen Behälter 3, der auf den Rollkörpern 23, 25 aufsteht. Diese Antriebskraft weist zwei Komponenten auf. Eine Komponente ist senkrecht zu den Rollenachsen gerichtet. Die andere Komponente ist parallel zu den Rollenachsen gerichtet. Wenn die beiden Rollen 21, 22 gleichsinnig gedreht werden, dann wird die parallel zu den Rollenachsen gerichtete Komponente der Antriebskraft null und der Behälter wird senkrecht zu den Rollenachsen bewegt. Wenn die Rollen 21, 22 gegensinnig bewegt werden, dann wird die senkrecht zu den Rollenachsen gerichtete Kraft null und der Behälter wird parallel zu den Rollenachsen bewegt.

In der in Fig. 4 dargestellten Übergabestation der ersten Art 12 bedeutet dies, dass ein Behälter, wenn die Rollen 21, 22 gegensinnig gedreht werden, auf die Übergabestation 12 transportiert wird.

In der Übergabestation der ersten Art 12 sind die Übergabefinger als Röllchenleisten 27, 28 ausgebildet. Jede Röllchenleiste 27, 28 weist eine Vielzahl von drehbar gelagerten Röllchen 29 auf, wobei die Röllchen 29 um Achsen drehbar sind, die senkrecht zu den Rollenachsen der Rollen 21, 22 verlaufen. Ein Antrieb der Röllchen 29 ist nicht erforderlich, wenn die Röllchenleisten 27, 28 leicht geneigt sind.

Die Übergabeeinrichtung der ersten Art 12 weist noch seitliche Anschläge 30, 31 auf, die eine seitliche Positionierung eines Behälters 3 sicherstellen. An jedem Ende der Röllchenleiste 27, 28 ist ein Endanschlag 32, 33 vorgesehen, der verhindert, dass ein Behältervon den Röllchenleisten 27, 28 herunterrutscht.

In Fig. 5 ist die gleiche Transporteinrichtung 10 dargestellt, allerdings mit einer Übergabeeinrichtung der zweiten Art 13. Hier sind die Übergabefinger 18, 19 wiederum mit Rollen 34, 35 ausgebildet, die ihrerseits mit Rollkörpern 36, 37 versehen sind. Die Rollen 34, 35 sind um Rollenachsen drehbar. Die Rollkörper 36, 37 sind in Rollkörperkäfigen 38, 39 drehbar gelagert und zwar um Rollkörperachsen, die zu den Rollenachsen der Rollen 34, 35 windschief sind. Die Rollkörper 36, 37 bilden Aufstandsflächen für einen Behälter. Im Bereich der Aufstandsfläche haben die Rollkörper 36, 37 entgegengesetzt gerichtete Winkel, d.h. sie schließen mit einer Projektion der Rollenachsen auf den Boden des Behälters 3 entgegengesetzt gleich große Winkel ein.

Die Funktion der Rollen 34, 35 ist analog zu der Funktion der Rollen 21, 22. Wenn ein Behälter 3 auf den Rollkörpern 36, 37 abgestellt wird und die Rollen 34, 35 gegensinnig gedreht werden, dann wird der Behälter 3 in die Transporteinrichtung 10 gefördert.

Ein Behälter 3 wird mit dem Beschickungswagen 6 aus dem Beschickungsraum 4 in den Übergabebereich 9 befördert. Man kann sehen, dass der Beschickungswagen 6 mit dem Behälter unter der Transporteinrichtung 10 hindurchgefahren werden kann. Die Transporteinrichtung 10 und die Übergabefinger 18, 19 befinden sich in einer Höhe, die etwa der Höhe der Halteanordnung 5 entspricht, so dass der Beschickungswagen 6 auch mit aufgenommenem Behälter 3 genügend Raum hat, um unter der Transporteinrichtung 10 vorbeigefahren zu werden.

Sobald der Beschickungswagen 6 einen Bereich innerhalb der Transporteinrichtung 10 erreicht hat, wird der Behälter 3 durch die Behälteraufnahme 7 angehoben. Der Beschickungswagen 6 fährt dann wieder ein Stück zurück, wobei die Übergabefinger 18, 19 in die Ausklinkungen 16, 17 an der Behälteraufnahme 7 eintreten können. Die Behälteraufnahme 7 ist soweit angehoben worden, dass der Behälter 3 ohne Berührung der Übergabefinger 18, 19 über die Übergabefinger 18, 19 verbracht werden kann. Die Behälteraufnahme 7 kann dann abgesenkt werden, wodurch der Behälter 3 auf den Übergabefingern 18, 19 zu liegen kommt. In der Übergabeeinrichtung der zweiten Art 13 wird der Behälter 3 dann durch die Rollkörper 36, 37 in die Transporteinrichtung 10 gefördert, indem die Rollen 34, 35 gegensinnig gedreht werden.

Wenn der Behälter 3 in der Transporteinrichtung 10 angekommen ist, werden die Rollen 21, 22 gleichsinnig gedreht, um den Behälter 3 in eine gewünschte Position für die Handhabungsstation 14 zu bringen. Wenn der Behälter 3 dort angekommen ist, können die Rollen 21, 22 gegensinnig gedreht werden, um den Behälter 3 in die Handhabungsstation 14 zu fördern. Die Bedienungsperson 15 hat dann Zugriff auf das Innere des Behälters 3.

Wenn der Behälter 3 wieder zurück in einen Behälteraufnahmeraum 2 verbracht werden soll, dann fördert die Transporteinrichtung 10 ihn bis zu einer Übergabeeinrichtung der ersten Art 12. Dort werden die Rollen 21, 22 wieder gegensinnig gedreht und fördern den Behälter 3 auf die Röllchenleisten 27, 28.

Der Behälter 3 kann dort verbleiben, bis ein Beschickungswagen 6 frei ist. Der Beschickungswagen 6 wird dann unter die Röllchenleisten 27, 28 gefahren und die Behälteraufnahme 7 wird angehoben, bis die Röllchenleisten 27, 28 in die Ausklinkungen 16, 17 eintreten können. Der Behälter 3 kann dann durch weiteres Anhebend er Behälteraufnahme 7 von den Röllchenleisten 27, 28 abgehoben werden. Wenn der Beschickungswagen 6 dann von den Behälteraufnahmeräumen 2 weggefahren wird, kommt der Behälter 3 von der Übergabeeinrichtung der ersten Art frei und kann dann abgesenkt werden, so dass sich wiederum der in Fig. 2 dargestellte Zustand des Beschickungswagens 6 ergibt.

Dadurch, dass die Übergabeeinrichtung der ersten Art 12 näher an den Behälteraufnahmeräumen 2 angeordnet ist als die Übergabeeinrichtung der zweiten Art 13, ist im Grunde sichergestellt, dass ein leerer Beschickungswagen6 in die Übergabeeinrichtung der ersten Art 12 eingefahren werden kann, sozusagen auf dem Rückweg von der Übergabeeinrichtung der zweiten Art 13 zum Beschickungsraum 4.

Der Begriff "Behälter" ist hier in einem weiten Sinn zu verstehen. Der Behälter muss nicht unbedingt geschlossen sein. Er kann auch offene Seitenwände aufweisen, solange sichergestellt ist, dass der Behälter 3 stapelbar ist und in der Halteanordnung 5 gehalten werden kann.

## Patentansprüche

1. Stapellageranordnung (1) mit mehreren Behälteraufnahmeräumen (2), in denen Behälter (3) gestapelt lagerbar sind, einem Beschickungsraum (4), der unterhalb der Behälteraufnahmeräume (2) angeordnet ist, einer lösbaren Halteanordnung (5) zwischen dem Beschickungsraum (4) und den Behälteraufnahmeräumen (2), die in einer ersten Höhe angeordnet ist, und einem Beschickungsfahrzeug (6), das zwischen dem Beschickungsraum (4) und einem Übergabebereich (9) verfahrbar ist und das eine durch eine Hubeinrichtung in eine Hubrichtung bewegbare Behälteraufnahme (7) mit einer Behälteraufstandsfläche aufweist, mit der Behälter (3) von unten in einen jeweiligen Behälteraufnahmeraum (2) einbringbar und von unten aus dem jeweiligen Behälteraufnahmeraum (2) entnehmbar sind, **dadurch gekennzeichnet, dass** das Beschickungsfahrzeug (6) in eine Übergabeeinrichtung (12, 13) einfahrbar ist, die Behälteraufnahme (7) in der Behälteraufstandsfläche mindestens zwei zu mindestens einer Seite hin offene Ausklinkungen (16, 17) aufweist und die Übergabeeinrichtung (12, 13) zu den Ausklinkungen (16, 17) passende Übergabefinger (18, 19) aufweist, wobei die Übergabefinger (18, 19) in die Ausklinkungen (16, 17) eintreten, wenn das Beschickungsfahrzeug (6) in die Übergabeeinrichtung (12, 13) eingefahren wird.

2. Stapellageranordnung nach Anspruch 1, **dadurch gekennzeichnet, dass** die Übergabefinger (18, 19) eine Abstützfläche bilden, die in der gleichen Höhe in eine Transporteinrichtung (10) übergeht.

3. Stapellageranordnung nach Anspruch 2, **dadurch gekennzeichnet, dass** die Transporteinrichtung (10) mit zwei Arten von Übergabeeinrichtung verbunden ist, wobei eine erste Art (12) von Übergabeeinrichtungen zur Bereitstellung eines Behälters (3) dient, der in einen Behälteraufnahmeraum (2) einzulagern ist, und eine zweite Art (13) von Übergabeeinrichtung zur Aufnahme eines aus einem Behälteraufnahmeraum (2) entnommenen Behälters (3) dient.

4. Stapellageranordnung nach Anspruch 3, **dadurch gekennzeichnet, dass** die Transporteinrichtung (10) einen vorzugsweise geschlossenen Umlauf bildet und eine Übergabeeinrichtung der ersten Art (12) näher an den Behälteraufnahmeräumen (2) angeordnet ist als eine Übergabeeinrichtung der zweiten Art (13).

5. Stapellageranordnung nach Anspruch 4, **dadurch gekennzeichnet, dass** die Übergabeeinrichtungen (12, 13) innerhalb des Umlaufs angeordnet sind.

6. Stapellageranordnung nach einem der Ansprüche 3 bis 5, **dadurch gekennzeichnet, dass** eine Übergabeeinrichtung der ersten Art (12) und eine Übergabeeinrichtung der zweiten Art (13) in einer Fahrtrichtung des Beschickungsfahrzeugs (6) hintereinander angeordnet sind.

7. Stapellageranordnung nach einem der Ansprüche 1 bis 6, **dadurch gekennzeichnet, dass** insbesondere in der Übergabeeinrichtung der zweiten Art (13) Übergabefinger (18, 19) vorgesehen sind, die Rollen (34, 35) aufweisen, die um Rollenachsen drehantreibbar sind und an deren Umfang Rollkörper (36, 37) angeordnet sind, die um Rollkörperachsen drehbar sind, wobei die Rollenachsen und die Rollkörperachsen windschief zueinander ausgerichtet sind und die Rollkörper (36, 37) der Rollen (34, 35) entgegengesetzte Richtungen aufweisen.

8. Stapellageranordnung nach einem der Ansprüche 1 bis 7, **dadurch gekennzeichnet, dass** insbesondere in der Übergabeeinrichtung der ersten Art (12) Übergabefinger vorgesehen sind, die als vorzugsweise geneigte Röllchenleiste (27, 28) ausgebildet sind.

9. Stapellageranordnung nach einem der Ansprüche 2 bis 8, **dadurch gekennzeichnet, dass** die Transporteinrichtung (10) im Bereich mindestens einer Übergabeeinrichtung paarweise angeordnete Rollen (21, 22) aufweist, die um Rollenachsen drehantreibbar sind und an deren Umfang Rollkörper (23, 25) angeordnet sind, die um Rollkörperachsen drehbar sind, wobei die Rollenachsen und die Rollkörperachsen windschief zueinander ausgerichtet sind und die Rollkörper (23, 25) der Rollen (21, 22) eines Paares entgegengesetzte Richtungen aufweisen, wobei jede angetriebene Rolle (21, 22) in zwei Rotationsrichtungen antreibbar ist.

10. Stapellageranordnung nach Anspruch 11, **dadurch gekennzeichnet, dass** auf der der Übergabeeinrichtung der zweiten Art (13) gegenüberliegenden Seite der Transporteinrichtung (10) eine Handhabungsstation (14) angeordnet ist, in der eine Bedienungsperson (15) Zugriff auf einen Behälter (3) hat.

11. Stapellageranordnung nach einem der Ansprüche 1 bis 10, **dadurch gekennzeichnet, dass** im Übergabebereich (9) mindestens eine Übergabeeinrichtung (12, 13) angeordnet ist, die in einer zweiten Höhe angeordnet ist, die der ersten Höhe entspricht.

## Claims

1. Stack storage assembly (1) having a plurality of container receiving spaces (2), in which containers (3) can be stored in a stack, a charging space (4) which is arranged below the container receiving spaces (2), a detachable holding arrangement (5) between the charging space (4) and the container receiving spaces (2), which is arranged at a first height, and a charging vehicle (6) which can be moved between the charging space (4) and a transfer area (9) and which has a container receptacle (7) which can be moved in a lifting direction by a lifting device and has a container standing surface, by means of which containers (3) can be introduced from below into a respective container receiving space (2) and can be removed from below from the respective container receiving space (2), **characterized in that** the charging vehicle (6) can be moved into a transfer device (12, 13), the container receiving means (7) comprises in the containers standing surface at least two notches (16, 17) which are open towards at least one side, and the transfer device (12, 13) comprises transfer fingers (18, 19) matching the notches (16, 17), the transfer fingers (18, 19) entering the notches (16, 17) when the charging vehicle (6) is moved into the transfer device (12, 13).

2. Stack storage assembly according to claim 1, **characterized in that** the transfer fingers (18, 19) form a support surface which merges into a transport device (10) at the same height.

3. Stack storage assembly according to claim 2, **characterized in that** the transport device (10) is connected to two types of transfer device, a first type (12) of transfer device serving to provide a container (3) to be stored in a container receiving space (2) and a second type (13) of transfer device serving to receive a container (3) removed from a container receiving space (2).

4. Stack storage assembly according to claim 3, **characterized in that** the transport device (10) forms a preferably closed circulation and a transfer device of the first type (12) is arranged closer to the container receiving spaces (2) than a transfer device of the second type (13).

5. Stack storage assembly according to claim 4, **characterized in that** the transfer devices (12, 13) are arranged within the circulation.

6. Stack storage assembly according to one of claims 3 to 5, **characterized in that** a transfer device of the first type (12) and a transfer device of the second type (13) are arranged one behind the other in a direction of travel of the charging vehicle (6).

7. Stack storage assembly according to any of claims 1 to 6, **characterized in that**, in particular in the transfer device of the second type (13), transfer fingers (18, 19) are provided which have rollers (34, 35) which can be driven in rotation about roller axis and on the circumference of which are arranged rolling bodies (36, 37) which can be rotated about rolling body axis, the roller axis and the rolling body axis being aligned skewed to each other and the rolling bodies (36, 37) of the rollers (34, 35) having opposite directions.

8. Stack storage assembly according to any of claims 1 to 7, **characterized in that** transfer fingers are provided, in particular in the transfer device of the first type (12), which are designed as preferably inclined roller strips (27, 28).

9. Stack storage assembly according to any of claims 2 to 8, **characterized in that** the transport device (19) comprises, in the region of at least one transfer device rollers (21, 22) which are arranged in pairs, can be driven in rotation about roller axis and on whose circumference rolling bodies (23, 25) are arranged, which are rotatable about roller body axis, wherein the roller axis and the roller body axis are aligned skewed to each other and the roller bodies (23, 25) of the rollers (21, 22) of a pair have opposite directions, wherein each roller (21, 22) can be driven in two directions of rotation.

10. Stack storage assembly according to claim 11, **characterized in that** on the side of the transport device (10) opposite the transfer device of the second type (13) a handling station (14) is arranged, in which an operator (15) has access to a container (3).

11. Stack storage assembly according to any of claims 1 to 10, **characterized in that** in the transfer area (9) at least one transfer device (12, 13) is arranged, which is arranged at a second type corresponding to the first height.

## Revendications

1. Agencement de stockage par empilement (1) comprenant plusieurs espaces de réception de contenants (2) dans lesquels des contenants (3) peuvent être stockés empilés, un espace d'alimentation (4) qui est disposé sous les espaces de réception de contenants (2), un agencement de maintien (5) séparable entre l'espace d'alimentation (4) et les espaces de réception de contenants (2), qui est disposé à une première hauteur, et un véhicule d'alimentation (6) qui est mobile entre l'espace d'alimentation (4) et une zone de transfert (9) et qui présente une réception de contenant (7), qui peut être déplacée dans un sens de levage par un dispositif de levage, avec une surface de soulèvement de contenants avec laquelle des contenants (3) peuvent être introduits par le bas dans un espace de réception de contenant (2) respectif et peuvent être sortis par le bas de l'espace de réception de contenant (2) respectif, **caractérisé en ce que** le véhicule d'alimentation (6) peut être entré dans un dispositif de transfert (12, 13), la réception de contenants (7) dans la surface de soulèvement de contenants comprend au moins deux encoches (16, 17) ouvertes vers au moins un côté, et le dispositif de transfert (12, 13) présente des doigts de transfert (18, 19) adaptés aux encoches (16, 17), dans lequel les doigts de transfert (18, 19) pénètrent dans les encoches (16, 17), lorsque le véhicule d'alimentation (6) est entré dans le dispositif de transfert (12, 13) .

2. Agencement de stockage par empilement selon la revendication 1, **caractérisé en ce que** les doigts de transfert (18, 19) forment une surface d'appui qui passe à la même hauteur dans un dispositif de transport (10).

3. Agencement de stockage par empilement selon la revendication 2, **caractérisé en ce que** le dispositif de transport (10) est relié à deux types de dispositif de transfert, dans lequel un premier type (12) de dispositifs de transfert sert à fournir un contenant (3) qui doit être stocké dans un espace de réception de contenant (2), et un second type (13) de dispositif de transfert sert à recevoir un contenant (3) prélevé d'un espace de réception de contenant (2).

4. Agencement de stockage par empilement selon la revendication 3, **caractérisé en ce que** le dispositif de transport (10) forme un pourtour de préférence fermé et un dispositif de transfert du premier type (12) est disposé plus près des espaces de réception de contenants (2) qu'un dispositif de transfert du deuxième type (13).

5. Agencement de stockage par empilement selon la revendication 4, **caractérisé en ce que** les dispositifs de transfert (12, 13) sont disposés à l'intérieur du pourtour.

6. Agencement de stockage par empilement selon l'une des revendications 3 à 5, **caractérisé en ce qu'**un dispositif de transfert du premier type (12) et un dispositif de transfert du second type (13) sont disposés l'un derrière l'autre dans un sens de marche du véhicule d'alimentation (6).

7. Agencement de stockage par empilement selon l'une des revendications 1 à 6, **caractérisé en ce que** des doigts de transfert (18, 19) sont prévus en particulier dans le dispositif de transfert de second type (13), qui présentent des rouleaux (34, 35) qui peuvent être entraînés en rotation autour d'axes de rouleaux et sur le pourtour desquels des corps roulants (36, 37) sont disposés qui peuvent tourner sur des axes de corps roulants, dans lequel les axes de rouleaux et les axes de corps roulants sont alignés de travers entre eux et les corps roulants (36, 37) des rouleaux (34, 35) présentent des directions opposées.

8. Agencement de stockage par empilement selon l'une des revendications 1 à 7, **caractérisé en ce que** des doigts de transfert sont prévus en particulier dans le dispositif de transfert du premier type (12), qui sont conçus en tant que baguette de petits rouleaux (27, 28) de préférence inclinée.

9. Agencement de stockage par empilement selon l'une des revendications 2 à 8, **caractérisé en ce que** le dispositif de transport (10) présente au niveau d'au moins un dispositif de transfert, des rouleaux (21, 22) disposés par paire qui peuvent être entraînés en rotation autour d'axes de rouleaux et sur le pourtour desquels des corps roulants (23, 25) sont disposés qui peuvent tourner sur des axes de corps roulants, dans lequel les axes de rouleaux et les axes de corps roulants sont alignés de travers entre eux et les corps roulants (23, 25) des rouleaux (21, 22) d'une paire présentent des directions opposées, dans lequel chaque rouleau (21, 22) entraîné peut être entraîné dans deux sens de rotation.

10. Agencement de stockage par empilement selon la revendication 11, **caractérisé en ce que** sur le côté du dispositif de transport (10) opposé au dispositif de transfert du second type (13), un poste de manipulation (14) est disposé, dans lequel une personne de service (15) a accès à un contenant (3).

11. Agencement de stockage par empilement selon l'une des revendications 1 à 10, **caractérisé en ce qu'**au moins un dispositif de transfert (12, 13) est disposé dans la zone de transfert (9), qui est disposé à une seconde hauteur qui correspond à la première hauteur.
